# EUROPEAN PATENT APPLICATION

(11) **EP 3 934 039 A1**
(43) Date of publication of application: **05.01.2022**
(21) Application number: 20305755.9
(22) Date of filing: 03.07.2020
(51) Int. Cl.: H02G 15/14, H02G 1/14, H01R 4/00

(54) **CONDUCTOR CONNECTOR AND CABLE JOINT SYSTEM**

(71) Applicant: Nexans, 92400 Courbevoie (FR)
(72) Inventor: ROD, Alf Erik, 1788 Halden (NO)
(74) Representative: Ipsilon

(57) **Abstract**

The present invention relates to a conductor connector interconnecting a first power cable and a second power cable comprising at least one conductor and an insulation surrounding the conductor, each of said power cables further having a bared conductor end portion, where the conductor connector comprises a throughgoing bore for reception of the bared conductor end portions, and a recess at each side for reception of the insulation surrounding the conductor, where a diameter of the throughgoing bore is smaller than a diameter of the recesses, an outer diameter of the conductor connector being level with a diameter of the insulation , the diameter of the throughgoing bore being level with a diameter of the conductor.

The present invention also relates to a cable joint system for interconnecting a first power cable and a second power cable.

## Description

### FIELD OF THE INVENTION

The present invention relates to a power cable comprising at least one conductor part and, more particularly, to an electrical joint for end to end connection of electrical conductors of the power cable.

### BACKGROUND OF THE INVENTION

Submarine power cables are using conductors of stranded design of different geometries. These conductors are incapsulated by an insulation system going seamlessly over the conductor, making an insulated power cable phase.

The insulation system may be XLPE (cross-linked polyethylene), HDPE (high-density polyethylene), EPR (ethylene propylene rubber) or similar.

When power cables phase is to be joined in the field, on land or on board a vessel, it is common to use a pre-moulded joint body over the jointed cable phase, as a replacement for the insulation system that is removed during the conductor joint. The pre-moulded joint body is then manufactured in such a way that the pre-moulded joint body will deflect the electric field from the cable insulation of one side of the cable phase, into the pre-moulded joint body and thereafter axially along the pre-moulded joint body over the jointed area and into the cable insulation of the other cable phase.

To make this happen, it is critical to obtain an electrical connection from the cable core conductor to an inner electrode which is integrated with the pre-moulded joint body. Tis inner electrode is usually a semi-conductive element arranged in center of the pre-moulded joint body.

There are several methods used today to make a conductor connection. Normally a conductor connection ferrule is used to connect the two conductors together.

This conductor connection ferrule will increase a diameter of the conductor at the jointing area of typically 010-30 mm.

For high voltage cables a thickness of the insulation system is normally larger than this increased diameter over the conductor connection ferrule, and the conductor connection ferrule itself will therefore not be in contact with the inner electrode which is integrated with the pre-moulded joint body, which is needed in order to obtain an electrical connection.

WO 2016/192778 A1 relates to a rigid joint assembly, where the rigid joint assembly comprises a first cable core en section of a first electric cable and a second cable core end section of a second electric cable, said respective first and second cable core end section comprising an electrical cable core comprising at least an inner electric conductor, and an insulation system comprising at least an inner semi-conducting layer, an insulation layer and an outer semi-conducting layer. The rigid joint assembly further comprises a joint connection inside which the electrical cable core of the first cable core end section is jointed with the electrical cable core of the second cable core end section, and a water-tight metal casing assembly surrounding the joint connection. The casing assembly has a first cable entry part comprising an opening for receiving the first cable core end section and a second cable entry part comprising an opening for receiving the second cable core end section. The rigid joint assembly further comprises a first cable insulation system deformation preventing member that surrounds the first cable core end section at the first cable entry part and a second cable insulation system deformation preventing member that surrounds the second cable core end section at the second cable entry part, and the respective deformation preventing member comprises a rigid pipe that surrounds the respective cable core end section at the respective cable entry part.

WO 2016/192779 A1 relates to a rigid joint assembly, where the rigid joint assembly comprises a first cable core end section of a first electric cable, and a second cable core end section of a second electric cable. The respective first and second cable core end section comprises an electrical cable core comprising at least an inner electric conductor, and an insulation system comprising at least an inner semi-conducting layer, an insulation layer and an outer semi-conducting layer. The rigid joint assembly further comprises a joint connection inside which the electrical cable cores of the respective cable core end sections are jointed. The rigid joint assembly further comprising a water-tight metal casing surrounding the joint connection, which casing has a first cable entry part comprising an opening for receiving the first cable core end section and a second cable entry part comprising an opening for receiving the second cable core end section. The assembly further comprises a first load distributing member that surrounds the first cable core end section at the first cable entry part, and a second load distributing member that surrounds the second cable core end section at the second cable entry part. The respective load distributing member comprises a hollow member having an essentially conical external shape and a cylindrical internal surface that is in contact with an external surface of the cable core end section which it surrounds.

US 5.875.547 relates to a method for preventing transport of fluids-such as water and/or gas-through a joint between at least two insulated cable conductors. The method includes provision of a jointing ferrule for insertion of the conductor ends into the ferrule and making required electrical contacts, -and provision of a molded sheath of insulation material over the joint in sealed contact with the conductor insulation. The ferrule is pre-covered with a coating containing EEA copolymer to obtain improved adhesion between the ferrule and the insulation sheath. The mold material must be compatible with-and preferably of the same material-as the conductor insulation.

The prior art therefore relies on solutions which involve use of a plurality of elements and connections between these elements as well as to make an electrical connection with the center electrode integrated with a pre-moulded joint body. This results in a more cumbersome, more complicated and more time-consuming process for connecting two power cables, where also several things can go wrong during installation and over time.

In general, it is challenging and time-consuming to use an electrical joint for end to end connection of electrical conductors of the power cable.

There is thus a need for alternatives to today's electrical joint for end to end connection of electrical conductors of a power cable.

An object of the present invention is to provide an electrical joint for end to end connection of electrical conductors of a power cable which is simple and robust, and which may be used without danger of misuse.

A further object of the present invention is to seek to solve one or more of the problems or drawbacks according to prior art.

These objects are achieved with a conductor connector as defined in the independent claim 1.

Advantageous embodiments of the present invention are indicated in the dependent claims.

### SUMMARY OF THE INVENTION

The present invention relates to a conductor connector interconnecting a first power cable and a second power cable comprising at least one conductor and an insulation surrounding the conductor, each of said power cables further having a bared conductor end portion, where the conductor connector comprises a throughgoing bore for reception of the bared conductor end portions, and a recess at each side for reception of the insulation surrounding the conductor, a diameter of the throughgoing bore being smaller than a diameter of the recesses, an outer diameter of the conductor connector being level with a diameter of the insulation, the diameter of the throughgoing bore being level with a diameter of the conductor.

According to one embodiment of the present invention, the throughgoing bore for reception and accommodation of the bared conductors end portions may have an equal diameter over an entire length of the throughgoing bore. The first and second power cables will then have conductors with the same diameter.

However, it could also be envisaged that the first and second power cables could have conductors with different diameters, where the throughgoing bore for the first and second power cable in such an embodiment may be provided with two different diameters along the length of the throughgoing bore. The throughgoing bore may then be formed with a graduation or stepping where, for example, half of the length of the throughgoing bore may be formed with a larger diameter and the other half of the length of the throughgoing bore may be formed with a smaller diameter.

The graduation or stepping between the larger and smaller diameter may be abrupt or angled relative to a center line extending through the throughgoing bore.

However, one skilled in the art will appreciate that the length of the larger diameter extending through the throughgoing bore may also be greater than half the length of the throughgoing bore, while the length of the smaller diameter extending through the throughgoing bore will be correspondingly shorter than half the length.

In one aspect the power cable may have a stranded conductor.

Each stranded conductor may comprise a plurality of metallic wires med, for example of aluminum, copper, other metals or different alloys, where the metallic wires are bundled or wrapped together to form the stranded conductor.

The stranded conductor may be manufactured in a variety of configurations, where the plurality of metallic wires is bundled or wrapped together to form a bunch stranding configuration, a concentric stranding configuration, an unilay stranding configuration or a rope lay stranding configuration.

Furthermore, the stranded conductor may have a circular cross-section, but it could also be envisaged that the stranded conductor may be manufactured to have other cross-sections, for instance a triangular cross-section, a square cross-section or even a polygonal cross-section.

In one aspect, the insulation system for the stranded conductor may be XLPE (cross-linked polyethylene), HDPE (high-density polyethylene), EPR (ethylene propylene rubber) or the like.

In one aspect the conductor connector may be in the form of a sleeve or a hollow cylinder.

The conductor connector may be made from a conductive or semi-conductive material.

In one aspect, the conductor connector may be solid.

The conductor connector may also comprise means for fastening of the bared conductor end portions to the conductor connector when the bared conductor end portions are received and accommodated in the throughgoing bore of the conductor connector.

The means for fastening may comprise one or more screws and one or more radially threaded openings.

However, it can also be envisaged that the bared conductor end portions could be fastened to the conductor connector in other ways, for instance through mechanical compression, soldering or the like.

The present invention also relates to a cable joint system for interconnecting a first power cable and a second power cable each comprising at least one conductor and an insulation surrounding the conductors, each of said power cables further having a bared conductor end portion, where cable joint system comprises a conductor connector, the conductor connector comprising a throughgoing bore for reception of the bared conductor end portions having a diameter, an outer diameter of the conductor connector being adapted to be level with a diameter of the insulation, the diameter of the throughgoing bore being level with a diameter of the conductor, and a pre-moulded joint body, the pre-moulded joint body comprising a throughgoing body bore with a diameter, an inner electrode being integrated in the pre-moulded joint body, an inner diameter being level with the diameter of the throughgoing body bore, thereby providing a direct contact between the conductor connector and the inner electrode integrated in the pre-moulded joint body.

According to one aspect, the conductor connector may further comprise a recess at each opening to the throughgoing bore for reception of a part of the insulation surrounding the conductors, where the diameter of the throughgoing bore is smaller than a diameter of the recesses.

According to one aspect, the outer diameter of the conductor connector may be substantially equal to the diameter of the throughgoing body bore of the pre-moulded joint body.

According to yet an aspect, an axial length of the inner electrode may be adapted to extend at least over the axial length of the conductor connector.

The present invention also relates to a power cable comprising at least a first power cable, a second power cable and a cable joint, where the cable joint comprises a cable joint system.

### BRIEF DESCRIPTION OF THE DRAWINGS

Other advantages and characteristic features of the present invention will be seen clearly from the following detailed description, the appended figures and the following claims, wherein:
Figure 1 is a cross-sectional view of prior art joint for a power cable comprising one or more stranded conductors,
Figure 2 is a perspective view of a conductor connector ferrule and a center electrode of the joint according to figure 1,
Figure 3 is a perspective view of a conductor connector according to the present invention, and
Figure 4 is a cross-sectional view of the conductor connector when used to interconnecting a first power cable and a second power cable comprising at least one conductor and an insulation surrounding the conductor.

### DETAILED DESCRIPTION

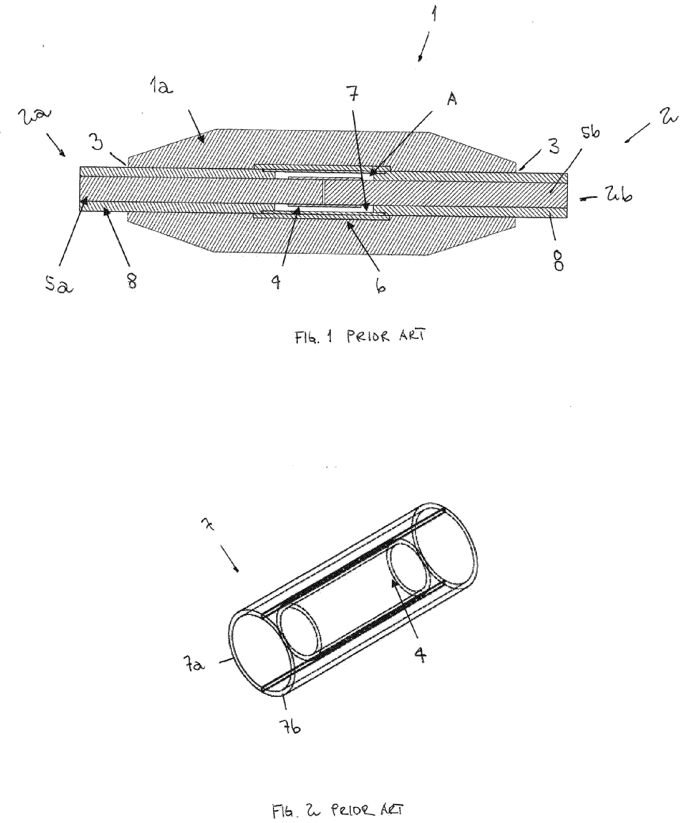

Figure 1 illustrate a prior art joint 1 for a power cable 2 comprising one or more conductors, where such a joint 1 may be used when the power cable 2 for different reasons is to be joined together, for instance during manufacturing and assembling of the power cable 2, if length of the power cable 2 is to be increased or if a part of the power cable 2 is damaged, where the damaged part of the power cable 2 is removed and the power cable 2 is re-joined again, or the like.

The joint 1 comprises a pre-moulded or prefabricated joint body 1a of, for instance, rubber. The joint 1 is prefabricated and comprises a pre-moulded or prefabricated joint body 1a of, for instance rubber. The pre-moulded or prefabricated joint body 1a is also provided with a throughgoing bore 3, such that an end of a first power cable 2a can be inserted into the pre-moulded or prefabricated joint body 1a from a first side of the pre-moulded or prefabricated joint body 1a and an end of a second power cable 2b can be inserted into the pre-moulded or prefabricated joint body 1a from a second and opposite side of the pre-moulded or prefabricated joint body 1a.

Each end of the first and second power cables 2a, 2b has been prepared for the joint in that a length of an insulation 8 surrounding the conductor 5a, 5b has been removed.

A conductor connection ferrule 4 of metal ensures an electrical connection between the conductors. Said conductor connection ferrule 4 is in the form of a hollow cylinder or sleeve. Furthermore, the conductor connection ferrule 4 can be placed in contact with the conductors 5a, 5b by means of mechanical compression, soldering, mechanical screwed or the like.

An inner electrode 6 is integrated in the pre-moulded or prefabricated joint body 1a, where the inner electrode 6 is in the form of a hollow cylinder or sleeve. The inner electrode 6 is made from a semi-conductive material. Furthermore, the inner electrode 6 is integrated in the pre-moulded or prefabricated joint body 1a in such a way that an inner diameter of the inner electrode 6 is in level with a diameter of the throughgoing bore 3, i.e. not projecting into the throughgoing bore 3.

Furthermore, a center electrode 7 is in direct contact with the inner electrode 6. The center electrode 7 is in the form of a hollow cylinder or sleeve (which may be split axially) or manufactured as two pieces of metall. The center electrode 7 is arranged in such a way that an outer diameter of the center electrode 7 is in level with an outer diameter of the insulation 8 surrounding the conductor 5a, 5b after that some of the insulation 8 has been removed.

The inner electrode 6 and the center electrode 7 has a length which is at least equal to a total length of the joint of conductors 5a, 5b, that is, has a length at least equal to the distance between the facing ends of the insulation 8.

As can be seen in the figure, the arrangement of the conductor connection ferrule 4, the inner electrode 6 and the center electrode 7 will provide a hollow area or air gap between the center electrode 7 and the conductor connection ferrule 4, whereby the center electrode 7 must be connected electrically to the conductor connection ferrule 4 through one or more wires, one or more laces, winding of metal mesh or taped by semi-conductive tape.

The pre-moulded or prefabricated joint body 1a is then made to deflect an electric field from the cable insulation of one side of the cable phase, into the pre-moulded or prefabricated joint body 1a from that side and thereafter the electric field will go axially along the pre-moulded or prefabricated joint body 1a and into the cable insulation of the other cable phase.

To make the above to happen, it is critical to obtain an electrical connection from the conductor 5a, 5b to the inner electrode 6 integrated in the pre-moulded or prefabricated joint body 1a.

Figure 2 shows in a perspective view the conductor connection ferrule 4 arranged inside the center electrode 7.

The center electrode 7 is in the form of a sleeve, where the sleeve is divided into two identical halves in order to facilitate the assembly of the joint 1.

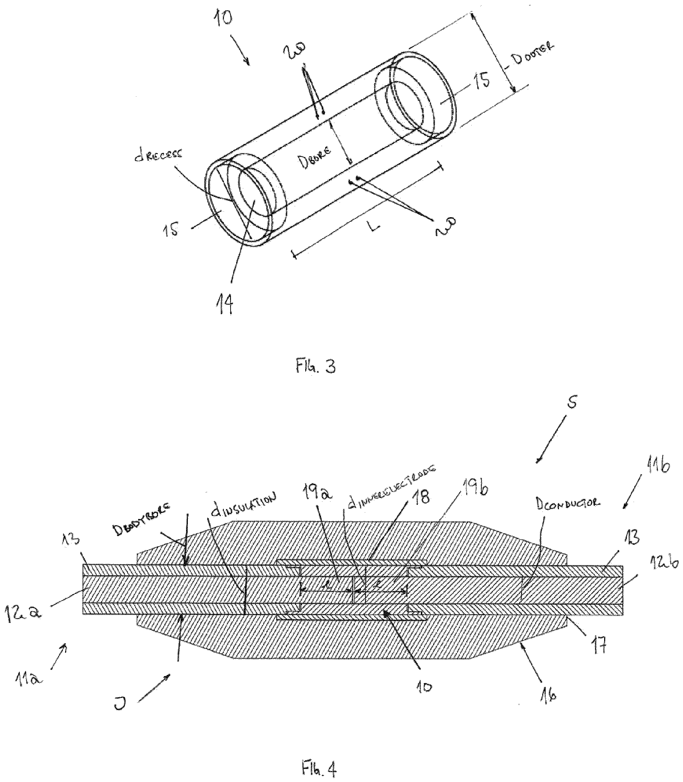

Figure 3 shows a conductor connector 10 which is used to interconnect a first power cable 11a and a second power cable 11b, where the first and second power cables 11a, 11b comprises at least one conductor 12a, 12b that is surrounded by an insulation 13.

The insulation 13 may, for instance, be XLPE (cross-linked polyethylene), HDPE (high-density polyethylene), EPR (ethylene propylene rubber) or similar.

The conductor connector 10 is provided with a throughgoing bore 14, where the throughgoing bore 14 has a length L and a diameter D_{bore}.

In this exemplary embodiment the throughgoing bore 14 is shown to have an equal diameter, i.e. the same diameter, over the entire length L of the throughgoing bore 14. In this case, the first and second power cables 11a, 11b will have conductors 12a, 12b with the same diameter.

However, it could also be envisaged that the first and second power cables 11a, 11b could have conductors 12a, 12b with different diameters, where the throughgoing bore 14 of the conductor connector 10 in such an embodiment is provided with two different diameters along the length L of the throughgoing bore 14.

The throughgoing bore 14 is then be formed with a graduation or stepping where, for example, half of the length L of the throughgoing bore 14 is formed to have a larger diameter and the other half of the length L of the throughgoing bore 14 is formed to have a smaller diameter.

The graduation or stepping between the larger and smaller diameter may be abrupt or angled relative to a center line extending through the throughgoing bore.

Before an end of the first and second power cables 11a, 11b are joined together in the conductor connector 10, a length 1 of the insulation 13 must be removed to uncover the conductor 12a, 12b of the power cable 11a, 11b, where this length 1 corresponds to half the length L of the throughgoing bore 14. The throughgoing bore 14 will receive and accommodate the bared conductors end portions 19a, 19b.

Furthermore, each end of the conductor connector 10 is provided with a recess 15, where this recess 15 will receive and accommodate a part of the insulation 14 surrounding the conductor 12a, 12b. Each recess 15 has a diameter d_{recess}.

In this exemplary embodiment the recesses 15 are shown to have an equal diameter, i.e. the same diameter. In this case, the insulation 13 of the first and second power cables 11a, 11b will have the same outer diameter.

However, it could also be envisaged that the insulation 13 of the first and second power cables 11a, 11b could have different outer diameter, where the recesses 15 in such an embodiment are provided to have different diameter.

A diameter D_{bore} of the throughgoing bore 14 is arranged to be smaller than a diameter d_{recess} of the recesses 15, while an outer diameter Dₒᵤₜₑᵣ of the conductor connector 10 is arranged to be the same as a diameter dᵢₙₛᵤₗₐₜᵢₒₙ of the insulation 13, such that the outer diameter Dₒᵤₜₑᵣ of the conductor connector 10 is level with the diameter dᵢₙₛᵤₗₐₜᵢₒₙ of the insulation 13 when the power cables 11a, 11b are accommodated in the throughgoing bore 14 of the conductor connector 10. Furthermore, the diameter D_{bore} of the throughgoing bore 14 is arranged to be substantially the same as a diameter D_{conductor} of the conductor 12a, 12b.

As can be seen, the conductor connector 10 is in the form of a sleeve of hollow cylinder and is made from a conductive or semi-conductive material.

The present invention relates also to a cable joint element J, see also figure 4, where the cable joint element J comprises a pre-moulded joint body 16 which is provided with a throughgoing bore 17 having a diameter D_{bodybore}.

The outer diameter Dₒᵤₜₑᵣ of the conductor connector 10 will then be substantially equal to the diameter D_{bodybore} of the throughgoing body bore 17 of the pre-moulded joint body 16.

An inner electrode 18 is integrated with the pre-moulded joint body 16, where the inner electrode 18 is such arranged inside the pre-moulded joint body 16 that the inner electrode 18 is level with a diameter of the throughgoing bore 17.

Furthermore, an axial length of the inner electrode 18 is adapted to extend at least over the length L of the conductor connector 10.

The inner electrode 18 may be in the form of a sleeve or two elongated elements of metal.

Figure 4 shows how the first and second power cables 11a, 11b are arranged in the conductor connector 10 according to the present invention in order to be connected to each other, where it can be seen that the bared conductors end portions 19a, 19b are received and accommodated in the throughgoing bore 14 of the conductor connector 10, while a part of the insulation 13 of the first and second power cables 11a, 11b are received and accommodated in the recesses 15.

Furthermore, the pre-moulded joint body 16 is arranged around the first and second power cables 11a, 11b, thereby covering the conductor connector 10 and the joining of the power cables 11a, 11b.

When the conductor connector 10, the power cables 11a, 11b and the pre-moulded joint body 16 is assembled in this way, an inside, i.e. the throughgoing bore 14, of the conductor connector 10 will be in contact with the bared conductors end portions 19a, 19b of the power cables 11a, 11b, while an outer surface of the conductor connector 10 will be in contact with the inner electrode 18 which is integrated with the pre-moulded joint body 16 and is arranged to be level with the throughgoing bore 17 of the pre-moulded joint body 16.

If the bared conductor end portions 19a, 19b must be fastened to the conductor connector 10 when the bared conductor end portions are received and accommodated in the throughgoing bore 14 of the conductor connector 10, the conductor connector 10 may comprise means for such fastening.

The means for fastening may then comprise one or more screws and one or more radially threaded openings 20 provided in the conductor connector 10.

However, it should be understood that the bared conductor end portions 19a, 19b could be fastened to the conductor connector in other ways, for instance through mechanical compression, soldering or the like.

Through the above arrangement it is obtained a direct contact between the conductor connector 10 and the inner electrode 18 integrated in the pre-moulded joint body 16.

The invention has now been explained with several non-limiting exemplary embodiments. One skilled in the art will appreciate that a variety of variations and modifications can be made to the conductor connector, the pre-moulded joint body and the cable joint system as described within the scope of the invention as defined in the appended claims.

## Claims

1. A conductor connector (10) for interconnecting a first power cable (11a) and a second power cable (11b) each comprising at least one conductor (12a, 12b) and an insulation (13) surrounding the conductors (12a, 12b), each of said power cables (11a, 11b) further having a bared conductor end portion (19a, 19b), **characterized in that** the conductor connector (10) comprises a throughgoing bore (14) for reception of the bared conductor end portions (19a, 19b), and a recess (15) at each opening to the throughgoing bore (14) for reception of a part of the insulation (13) surrounding the conductors (12a, 12b), a diameter (D_{bore}) of the throughgoing bore (14) being smaller than a diameter (d_{recess}) of the recesses (15), an outer diameter (Dₒᵤₜₑᵣ) of the conductor connector (10) being adapted to be level with a diameter (dᵢₙₛᵤₗₐₜᵢₒₙ) of the insulation (13), the diameter (D_{bore}) of the throughgoing bore (14) being level with a diameter (D_{conductor}) of the conductor (12a, 12b).

2. The conductor connector (10) according to claim 1,
**characterized in that** the conductor connector (10) is in the form of a sleeve or hollow cylinder.

3. The conductor connector (10) according to claim 1 or 2,
**characterized in that** the conductor connector (10) is made from a conductive or semi-conductive material.

4. The conductor connector (10) according to any preceding claims, **characterized in that** the conductor connector (10) is solid.

5. The conductor connector (10) according to any preceding claims,
**characterized in that the** conductor connector (10) comprises fastening means for fastening of the bared conductor end portion (19a, 19b) to the conductor connector (10).

6. The conductor connector (10) according to claim 5,
**characterized in that** the fastening means comprises one or more screws and radially threaded openings.

7. The conductor connector (10) according to claim 1,
**characterized in that** the diameter (D_{bore}) of the throughgoing bore (14) is equal over an entire length of the throughgoing bore (14).

8. The conductor connector (10) according to claim 1,
**characterized in that** the diameter (D_{bore}) of the throughgoing bore (14) vary over a length of the throughgoing bore (14).

9. A cable joint system for interconnecting a first power cable (11a) and a second power cable (11b) each comprising at least one conductor (12a, 12b) and an insulation (13) surrounding the conductors (12a, 12b), each of said power cables (11a, 11b) further having a bared conductor end portion (19a, 19b), **characterized in that the** cable joint system comprises a conductor connector (10), the conductor connector (10) comprising a throughgoing bore (14) for reception of the bared conductor end portions (19a, 19b) having a diameter (D_{bore}), an outer diameter (Dₒᵤₜₑᵣ) of the conductor connector (10) being adapted to be level with a diameter (dᵢₙₛᵤₗₐₜᵢₒₙ) of the insulation (13), the diameter (D_{bore}) of the throughgoing bore (14) being level with a diameter (D_{conductor}) of the conductor (12a, 12b), and a pre-moulded joint body (16), the pre-moulded joint body (16) comprising a throughgoing body bore (17) with a diameter (D_{bodybore}), an inner electrode (18) being integrated in the pre-moulded joint body (16), an inner diameter (d_{innerelectrode}) being level with the diameter (D_{bodybore}) of the throughgoing body bore (17), thereby providing a direct electrical contact between the conductor connector (10) and the inner electrode (18) integrated in the pre-moulded joint body (16).

10. The cable joint system according to claim 9,
**characterized in that** the conductor connector (10) further comprises a recess (15) at each opening to the throughgoing bore (14) for reception of a part of the insulation (13) surrounding the conductors (12a, 12b), the diameter (D_{bore}) of the throughgoing bore (14) being smaller than a diameter (d_{recess}) of the recesses (15).

11. The cable joint system according to claim 9 or 10,
**characterized in that** the outer diameter (Dₒᵤₜₑᵣ) of the conductor connector (10) is substantially equal to the diameter (D_{bodybore}) of the throughgoing body bore (17).

12. The cable joint system according to claim 10,
**characterized in that** an axial length of the inner electrode (18) is adapted to extend at least the axial length of the conductor connector (10).

13. A power cable comprising at least a first power cable (11a), a second power cable (11b) and a cable joint, the cable joint comprising a cable joint system according to any of the 9-12.
